# EUROPEAN PATENT SPECIFICATION

(11) **EP 3 359 698 B1**
(45) Date of publication and mention of the grant of the patent: **04.12.2019**
(21) Application number: 16784542.9
(22) Date of filing: 06.10.2016
(51) Int. Cl.: C22B 3/20, B01D 11/04, C22B 3/02

(54) **EXTRACTION ARRANGEMENT FOR SOLVENT EXTRACTION**
EXTRAKTIONSANORDNUNG ZUR LÖSUNGSMITTELEXTRAKTION
DISPOSITIF D'EXTRACTION POUR EXTRACTION PAR SOLVANT

(30) Priority: 07.10.2015 FI 20155702
(43) Date of publication of application: 15.08.2018
(73) Proprietor: Outotec (Finland) Oy, 02230 Espoo (FI)
(72) Inventor: FREDRIKSSON, Henri, 00320 Helsinki (FI); SAARIO, Rami, 02230 Espoo (FI); MATINHEIKKI, Juri, Helsinki 00510 (FO); VESANEN, Manu, 00390 Helsinki (FI); VUORTENVÄLI, Hanna, 00500 Helsinki (FI)
(74) Representative: Boco IP Oy Ab
(86) International application number: PCT/FI2016/050694
(87) International publication number: WO 2017/060568

(56) References cited:
- WO-A1-00/25882
- WO-A1-2014/001623
- WO-A1-2014/001625

## Description

### Field of the invention

The invention relates to an extraction arrangement for solvent extraction as defined in the preamble of independent claim 1.

In solvent extraction, two or more mutually immiscible liquid phases are mixed together for example by using a pump and at least one mixer to form mixed dispersion. The mixed dispersion is thereafter fed into a settler that is arranged to separate the liquid phases.

Publications WO 00/25882 and WO 2014/001622 present solvent extraction settler arrangements.

### Objective of the invention

The object of the invention is to provide a lightweight extraction arrangement for solvent extraction that can be transported in the form of ready-to use units to the site on which the extraction arrangement is to be used and mounted in the form of ready-to use units on the site on which the extraction arrangement is to be used.

### Short description of the invention

The extraction arrangement of the invention is characterized by the definitions of independent claim 1.

Preferred embodiments of the extraction arrangement are defined in the dependent claims.

The invention is based on the realization that skid units i.e. the extraction modules comprising at least one extraction section each having a pump, a mixer, a settler, a first discharge launder, and a second discharge launder form a foundation making a modular plant lay-out possible.

Since each extraction section of each extraction module comprise all necessary piping between the parts of the extraction section, i.e. the pump, the mixer, the settler, the first discharge launder, and the second discharge launder, it allows instrumentation assembly on site of manufacture which allows delivery of Plug-and-play-plants.

In an embodiment of the extraction arrangement each extraction module comprise a framework structure having an outer shape of a cuboid such as an outer shape corresponding to that of 20 foot shipping container as set forth in standard ISO 668 Series 1 "Freight containers - classification, dimensions, and ratings". In this embodiment of the extraction arrangement, each extraction section of each extraction module is arranged fully within an inner space defined by the outer shape of the framework structure. This provided for easy transportation. In each extraction module in this embodiment of the extraction arrangement, the pump, the mixer, the settler, the first discharge launder, and the second discharge launder is supported at the framework structure having an outer shape of a cuboid. An advantage of this is that the pump, the mixer, the settler, the first discharge launder, and the second discharge launder can have a simpler construction such as a less-rigid construction, because the framework structure having an outer shape of a cuboid functions as a supporting structure.

An embodiment of the extraction arrangement comprises a plurality of extraction modules each comprising at least one extraction section, where the pump comprises a pump housing, where the mixer comprises a mixer housing, where the settler comprises a settler housing, where the first discharge launder comprises a first discharge launder housing, and where the second discharge launder of comprises a second discharge launder housing. In this embodiment of the extraction arrangement, in each extraction section of each extraction module the pump housing is made of polymer and having a substantially uniform microstructure throughout pump housing, the mixer housing is made of polymer and having a substantially uniform microstructure throughout mixer housing, the settler housing is made of polymer and having a substantially uniform microstructure throughout settler housing, the first discharge launder housing is made of polymer and having a substantially uniform microstructure throughout first discharge launder housing, and the second discharge launder housing is made of polymer and having a substantially uniform microstructure throughout second discharge launder housing. In this embodiment of the extraction arrangement, in each extraction section in each extraction module the pump housing, the mixer housing, the settler housing, the first discharge launder housing, and the second discharge launder housing is made of polymer by using rotational molding. This provides for lightweight extraction modules and low-cost manufacturing. Rotational molding enables also for molding of complex structural details such as small and large openings and fastening features in the molded structure.

### List of figures

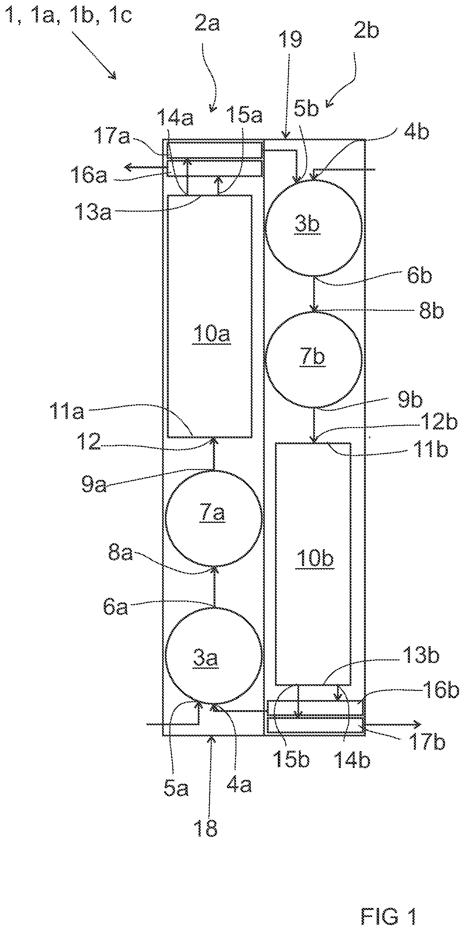

In the following the invention will described in more detail by referring to the figures, which
Figure 1 is a schematic illustration of an extraction module that can be used in a first embodiment of the extraction arrangement schematically illustrated in part in figure 4,

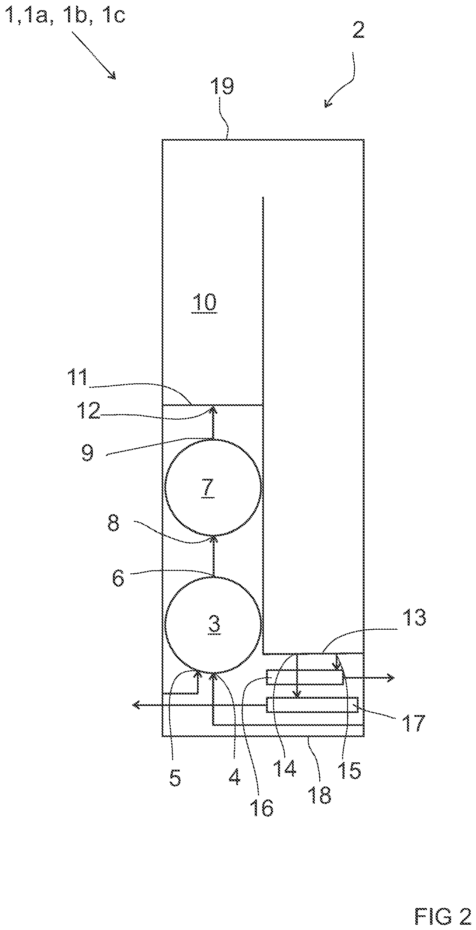

Figure 2 is a schematic illustration of an extraction module that can be used in a second embodiment of the extraction arrangement schematically illustrated in part in figure 5,
Figure 3 is a schematic illustration of an extraction module that can be used in a third embodiment of the extraction arrangement schematically illustrated in part in figure 6,
Figure 4 is a schematic illustration of a part of a first embodiment of the extraction arrangement,
Figure 5 is a schematic illustration of a part of a second embodiment of the extraction arrangement,
Figure 6 is a schematic illustration of a part of a third embodiment of the extraction arrangement,

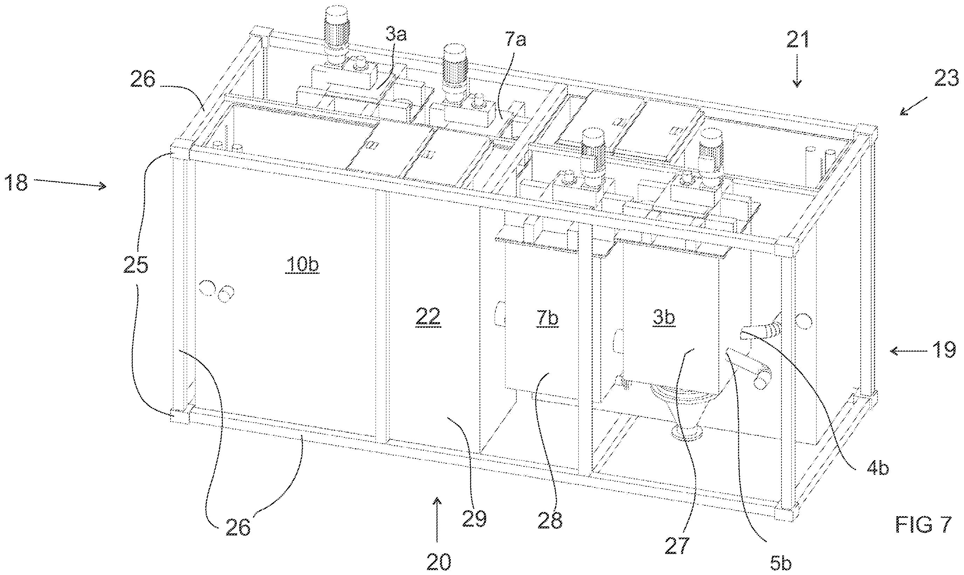

Figure 7 shows an extraction module that can be used in a fourth embodiment of the extraction arrangement illustrated in part in figures 11 and 12,

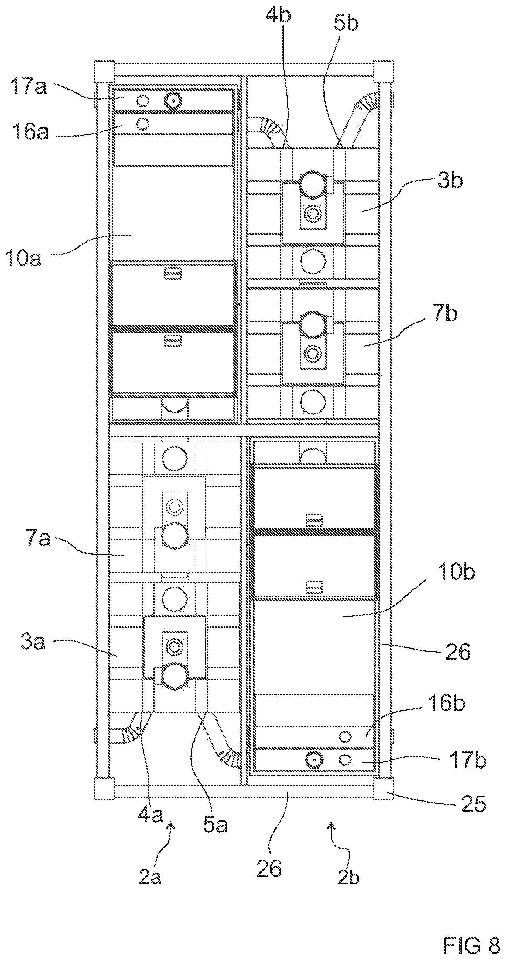

Figure 8 shows the extraction module shown in figure 7 as seen from above,

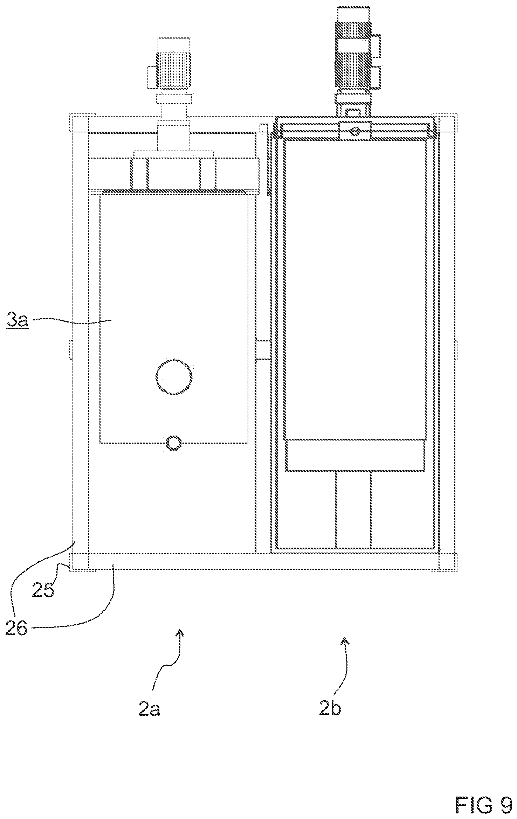

Figure 9 shows the extraction module shown in figure 7 as seen from one end side,

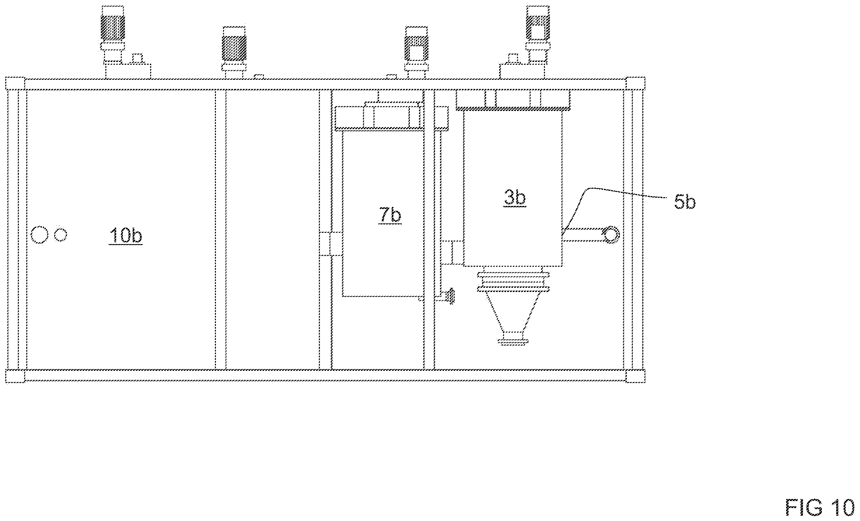

Figure 10 shows the extraction module shown in figure 7 as seen from one side, and
Figures 11 and 12 shows a part of a fourth embodiment of the extraction arrangement.

### Detailed description of the invention

The invention relates to an extraction arrangement for solvent extraction.

The extraction arrangement comprises at least one extraction modules 1; 1a, 1b, 1c.

Each extraction module comprises at least one extraction section 2; 2a, 2b.

Each extraction section 2; 2a, 2b has a pump 3; 3a, 3b for mixing two or more mutually immiscible liquid phases together into dispersion.

The pump 3; 3a, 3b can for example be a pump of the type presented in publication WO 2012/069703.

The pump have a first inlet 4; 4a, 4b for feeding liquid organic phase (not shown in the figures) into the pump, a second inlet 5; 5a, 5b for feeding liquid aqueous phase (not shown in the figures) into the pump, and a first outlet 6; 6a, 6b for feeding dispersion out of the pump.

Each extraction section 2; 2a, 2b has a mixer 7; 7a, 7b having a third inlet 8; 8a, 8b in fluid communication with the first outlet of the pump for feeding dispersion into the mixer from the pump and a second outlet 9; 9a, 9b for feeding mixed dispersion out of the mixer.

The mixer 7; 7a, 7b can for example be a pump of the type presented in publication WO 2012/035207.

Each extraction section 2; 2a, 2b has a settler 10; 10a, 10b for separation of solution phases of mixed dispersion.

The settler has at a feed end 11; 11a, 11b a fourth inlet 12; 12a, 12b in fluid communication with the second outlet of the mixer for feeding mixed dispersion into the settler from the mixer.

The settler has at a discharge end 13; 13a, 13b a third outlet 14; 14a, 14b and a fourth outlet (15; 15a, 15b).

The settler 10; 10a, 10b is configured to separate of the mixed dispersion while the mixed dispersion flows from the feed end 11; 11a, 11b to the discharge end 13; 13a, 13b.

Each extraction section 2; 2a, 2b has a first discharge launder 16; 16a, 16b in fluid communication with the third outlet of the settler and a second discharge launder 17; 17a, 17b in fluid communication with the fourth outlet of the settler.

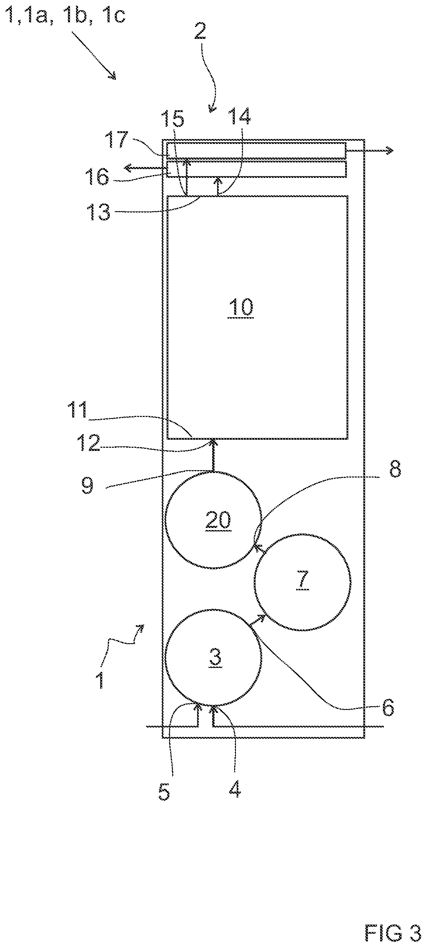

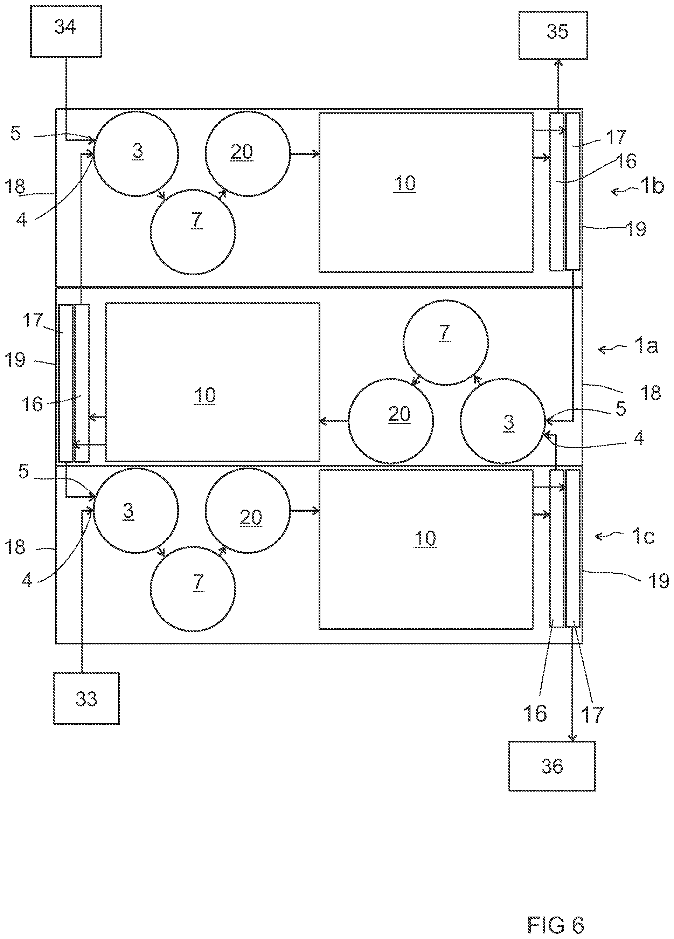

In at least one extraction section 2; 2a, 2b of at least one extraction module 1; 1a, 1b, 1c, the second outlet 9 of the mixer 7; 7a, 7b may be in fluid communication with the fourth inlet 12 of the settler via a second mixer 32, as is shown in figures 3 and 6.

Each extraction module 1; 1a, 1b, 1c may have the form of a cuboid having a first end side 18 and an opposite second end side 19, a bottom side 20, a top side 21, a first side 22, and a second side 23.

Each extraction module 1; 1a, 1b, 1c may comprise a framework structure 24 having an outer shape in the form of a cuboid. In such case, by the pump 3; 3a, 3b, the mixer 7; 7a, 7b, the settler 10; 10a, 10b, the first discharge launder 16; 16a, 16b, and the second discharge launder 17; 17a, 17b of said at least one extraction section 2; 2a, 2b of each extraction module 1; 1a, 1b, 1c are preferably, but not necessarily, arranged fully within an inner space having the form of a cuboid, which inner space is defined by the framework structure 24.

In case, each extraction module 1; 1a, 1b, 1c comprise a framework structure 24 having an outer shape in the form of a cuboid, by at least one of the pump 3; 3a, 3b, the mixer 7; 7a, 7b, the settler 10; 10a, 10b, the first discharge launder 16; 16a, 16b, and the second discharge launder 17; 17a, 17b of said at least one extraction section 2; 2a, 2b of the extraction module 1; 1a, 1b, 1c is preferably, but not necessarily, supported at the framework structure 24 of the extraction module 1; 1a, 1b, 1c.

In case, each extraction module 1; 1a, 1b, 1c comprise a framework structure 24 having an outer shape in the form of a cuboid, the dimensions of the framework structure 24 may correspond to the dimensions of a standard 20 foot freight container. In such case, the framework structure 24 has preferably, but not necessarily, corner fittings 25, which may be corner fittings as set forth in standard ISO 1161 series 1 "Freight containers - Corner fittings - specification", at the corners of the framework structure 24 and beams 26 at the edges of the framework structure 24, which beams connects the corner fittings to a framework structure 24 having dimensions of a standard 20 foot shipping container as set forth in standard ISO 668 Series 1 "Freight containers - classification, dimensions, and ratings".

In at least one extraction module 1; 1a, 1b, 1c of the extraction arrangement, the output of the pump 3; 3a, 3b is preferably, but not necessarily, in the order of 25 to 140 m³/h, such as in the order of 25 to 75 m³/h or in the order of 80 to 140 m³/h.

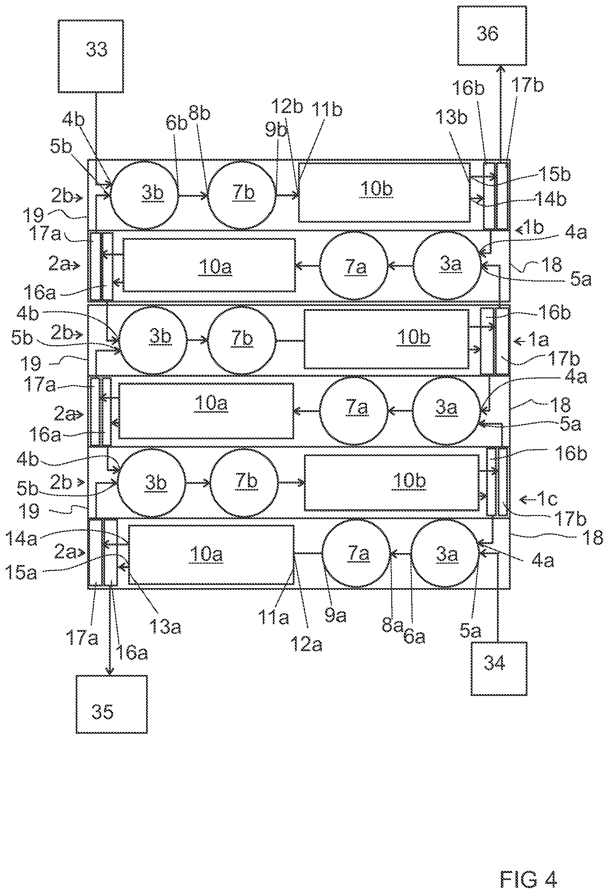

The extraction arrangement may comprise a plurality of extraction modules 1; 1a, 1b, 1c arranged preferably, but not necessarily, into a set of parallel extraction modules, as is shown in the embodiments shown in part in figures 4, 5, and 6.

In the extraction arrangement, at least one first discharge launder 16; 16a, 16b of an extraction section 2; 2a, 2b of an extraction module 1; 1a, 1b, 1c in the set of parallel extraction modules is preferably, but not necessarily, in fluid communication with a first inlet 4; 4a, 4b of a pump 3; 3a, 3b of another extraction module 1; 1a, 1b, 1c of the set of parallel extraction modules.

In the extraction arrangement, at least one second inlet 5; 5a, 5b of a pump 3; 3a, 3b of an extraction section 2; 2a, 2b of an extraction module 1; 1a, 1b, 1c in the set of parallel extraction modules is preferably, but not necessarily, in in fluid communication with the second discharge launder 17; 17a, 17b of another extraction module 1; 1a, 1b, 1c of the set of parallel extraction modules.

In the extraction arrangement, one first inlet 4; 4a, 4b of a pump 3; 3a, 3b of an extraction section 2; 2a, 2b of an extraction module 1; 1a, 1b, 1c in the set of parallel extraction modules is preferably, but not necessarily, in in fluid communication with a first feed arrangement 33 for feeding organic phase into the set of parallel extraction modules. In such case, liquid organic phase is preferably, but not necessarily, fed into the set of parallel extraction modules solely via said one first inlet 4; 4a, 4b of a pump 3; 3a, 3b of an extraction section 2; 2a, 2b of an extraction module 1; 1a, 1b, 1c in the set of parallel extraction modules.

In the extraction arrangement, one second inlet 5: 5a, 5b of a pump 3; 3a, 3b of an extraction section 2; 2a, 2b of an extraction module 1; 1a, 1b, 1c in the set of parallel extraction modules is preferably, but not necessarily, in in fluid communication with a second feed arrangement 34 for feeding liquid aqueous phase into the set of parallel extraction modules. In such case, second liquid aqueous phase is preferably, but not necessarily, fed into the set of parallel extraction modules solely via said one second inlet 5; 5a, 5b of a pump 3; 3a, 3b of an extraction section 2; 2a, 2b of an extraction module 1; 1a, 1b, 1c in the set of parallel extraction modules.

In the extraction arrangement, one second discharge launder 17; 17a, 17b of an extraction module 1; 1a, 1b, 1c in the set of parallel extraction modules is preferably, but not necessarily, in in fluid communication with a second discharge arrangement 36 for feeding extracted liquid aqueous phase from the set of parallel extraction modules. In such case, extracted liquid aqueous phase is preferably, but not necessarily, fed from the set of parallel extraction modules solely via said one second discharge launder 17; 17a, 17b of an extraction module 1; 1a, 1b, 1c in the set of parallel extraction modules.

In the extraction arrangement, one first discharge launder 16; 16a, 16b of an extraction module 1; 1a, 1b, 1c in the set of parallel extraction modules is preferably, but not necessarily, in in fluid communication with a first discharge arrangement 35 for feeding extracted liquid organic phase from the set of parallel extraction modules. In such case, extracted liquid organic phase is preferably, but not necessarily, fed from the set of parallel extraction modules solely via said one first discharge launder 17; 17a, 17b of an extraction module 1; 1a, 1b, 1c in the set of parallel extraction modules.

In an embodiment of the extraction arrangement, the extraction arrangement is used for extraction and the first feed arrangement 33 is configured to feed liquid organic phase in the form of barren organic into the set of parallel extraction modules and the second feed arrangement 34 is configured to feed liquid aqueous phase in the form of pregnant leach solution into the set of parallel extraction modules. In this embodiment of the extraction arrangement, the first discharge arrangement 35 is configured to receive extracted liquid organic phase in the form of loaded organic from the set of parallel extraction modules and the second discharge arrangement 36 is configured to receive extracted liquid aqueous phase in the form of raffinate from the set of parallel extraction modules.

In an embodiment of the extraction arrangement, the extraction arrangement is used for washing/scrubbing and the first feed arrangement 33 is configured to feed liquid organic phase in the form loaded organic into the set of parallel extraction modules and the second feed arrangement 34 is configured to feed liquid aqueous phase in the form of acidic aqueous solution into the set of parallel extraction modules. In this embodiment of the extraction arrangement, the first discharge arrangement 35 is configured to receive extracted liquid organic phase in the form of loaded organic from the set of parallel extraction modules and the second discharge arrangement 36 is configured to receive extracted liquid aqueous phase in the form of loaded acidic aqueous solution from the set of parallel extraction modules.

In an embodiment of the extraction arrangement, the extraction arrangement is used for stripping and the first feed arrangement 33 is configured to feed liquid organic phase in the form loaded organic into the set of parallel extraction modules and the second feed arrangement 34 is configured to feed liquid aqueous phase in the form of lean electrolyte into the set of parallel extraction modules. In this embodiment of the extraction arrangement, the first discharge arrangement 35 is configured to receive extracted liquid organic phase in the form of barren organic from the set of parallel extraction modules and the second discharge arrangement 36 is configured to receive extracted liquid aqueous phase in the form of rich electrolyte from the set of parallel extraction modules.

In an embodiment of the extraction arrangement, the extraction arrangement is used for stripping and the first feed arrangement 33 is configured to feed liquid organic phase in the form loaded organic into the set of parallel extraction modules and the second feed arrangement 34 is configured to feed liquid aqueous phase in the form of diluted H₂SO₄ solution into the set of parallel extraction modules. In this embodiment of the extraction arrangement, the first discharge arrangement 35 is configured to receive extracted liquid organic phase in the form of barren organic from the set of parallel extraction modules and the second discharge arrangement 36 is configured to receive extracted liquid aqueous phase in the form of metal sulfate solution from the set of parallel extraction modules.

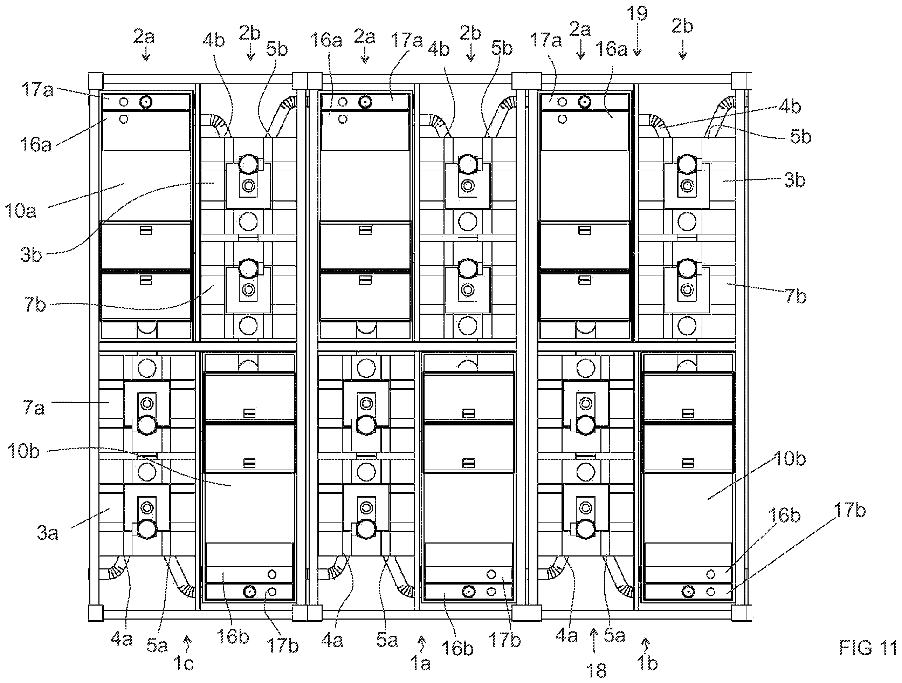

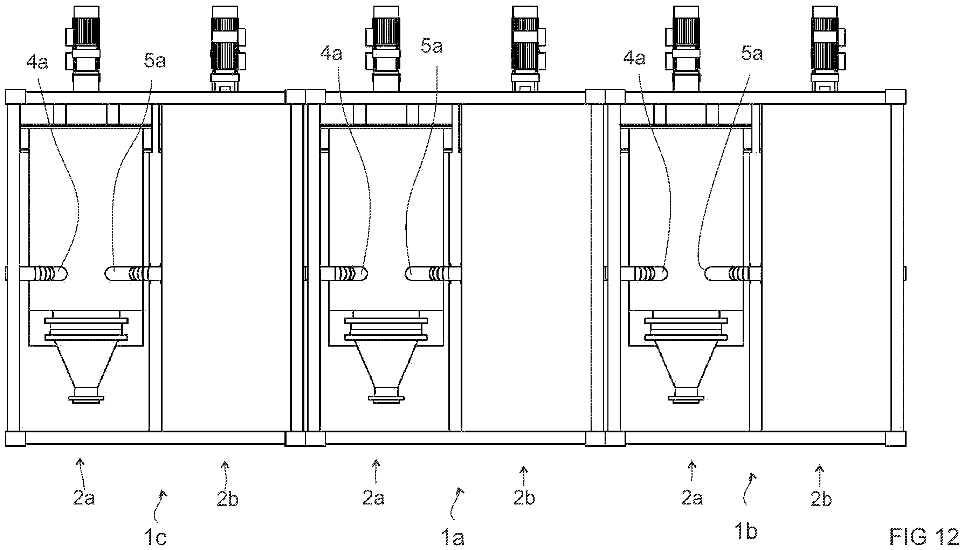

Figure 4 shows a part of a first embodiment of an extraction arrangement and figures 11 and 12 shows a part of a fourth embodiment of an extraction arrangement.

In figure 4 and in figures 11 and 12, the arrangement comprises a plurality of extraction modules 1a, 1b, 1c each comprising a first extraction section 2a and a second extraction section 2b.

In figure 4 and in figures 11 and 12 the first inlet 4a and the second inlet 5a of the pump 3a of the first extraction section 2a is positioned at the first end side 18 in each extraction module 1a, 1b, 1c.

In figure 4 and in figures 11 and 12 the first inlet 4b and the second inlet 5b of the pump 3b of the second extraction section 2b being positioned at the second end side 19 in each extraction module 1a, 1b, 1c.

In figure 4 and in figures 11 and 12 the first discharge launder 16a and the second discharge launder 17a of the first extraction section 2a being positioned at the second end side 19 in each extraction module 1a, 1b, 1c.

In figure 4 and in figures 11 and 12 the first discharge launder 16b and the second discharge launder 17b of the second extraction section 2b being positioned at the first end side 18 in each extraction module 1a, 1b, 1c.

In figure 4 and in figures 11 and 12, the arrangement comprises a plurality of extraction modules 1a, 1b, 1c arranged in parallel into a set of parallel extraction modules (not marked with a reference numeral) so that the first extraction sections 2a and the second extraction sections 2b are arranged in alternating order in the set of parallel extraction modules.

In figure 4 and in figures 11 and 12 the second discharge launder 17a of the first extraction section 2a of the extraction module 1a, 1b, 1c is in fluid communication with the second inlet 5b of the pump 3b of the second extraction section 2b of the extraction module 1a, 1b, 1c in each extraction module 1a, 1b, 1c in the set of parallel extraction modules.

In figure 4 and in figures 11 and 12 the first discharge launder 16b of the second extraction section 2b of the extraction module 1a, 1b, 1c is in fluid communication with the first inlet 4a of the pump 3a of the first extraction section 2a of the extraction module 1a, 1b, 1c in each extraction module 1a, 1b, 1c in the set of parallel extraction modules.

In figure 4 and in figures 11 and 12 at least one first discharge launder 16a of a first extraction section 2a of an extraction module 1a, 1b is in fluid communication with a first inlet 4b of a pump 3b of a second section 2b of another extraction module 1b, 1c in the set of parallel extraction modules.

In figure 4 and in figures 11 and 12 at least one second discharge launder 17b of a second extraction section 2b of an extraction module 1a, 1c is in fluid communication with a first inlet 5a of a pump 3a of the first section 2a of another extraction module 1a, 1b in the set of parallel extraction modules.

In figure 4 one first inlet 4b of a pump 3b of a second section 2b of an extraction module 1b in the set of parallel extraction modules is in fluid communication with a first feed arrangement 33 for feeding liquid organic phase into the set of parallel extraction modules.

In figure 4 one second inlet 5a of a pump 3a of a first section 2a of an extraction module 1c in the set of parallel extraction modules is in fluid communication with a second feed arrangement 34 for feeding liquid aqueous phase into the set of parallel extraction modules.

In figure 4 one second discharge launder 17b of a second section 2b of an extraction module 1b in the set of parallel extraction modules is in fluid communication with a second discharge arrangement 36 for discharging extracted liquid aqueous phase from the set of parallel extraction modules.

In figure 4 one first discharge launder 16a of a first section 2a of an extraction module 1c in the set of parallel extraction modules is in fluid communication with a first discharge arrangement 35 for discharging extracted liquid aqueous phase from the set of parallel extraction modules

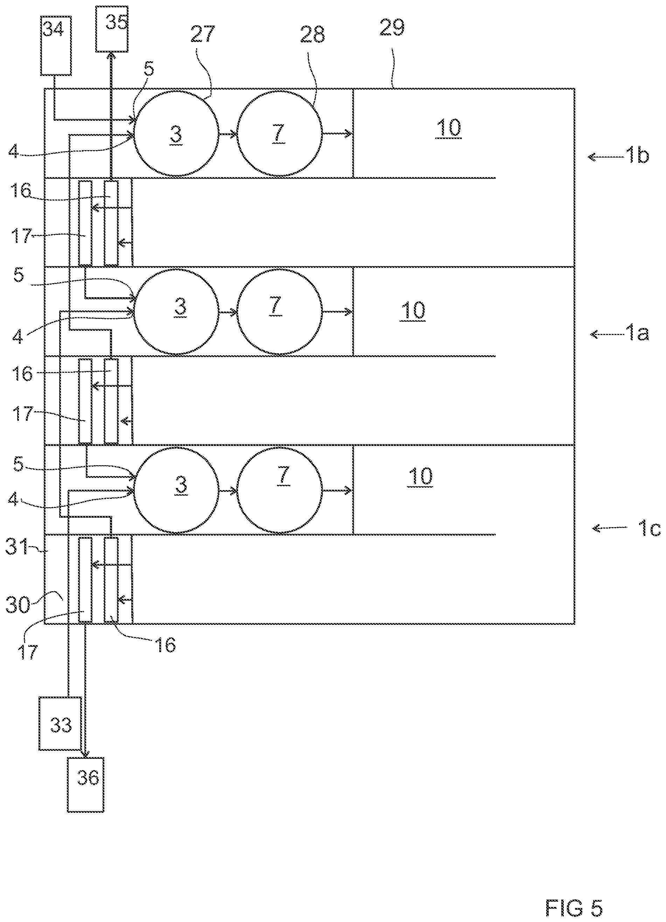

Figure 5 shows a part of a second embodiment of an extraction arrangement.

In figure 5, the arrangement comprises a plurality of extraction modules 1a, 1b, 1c each comprising one extraction section 2.

In figure 5 the first inlet 4 and the second inlet 5 of the pump 3 of the extraction section 2 is positioned at the first end side 18 in each extraction module 1a, 1b, 1c.

In figure 5 the first discharge launder 16 and the second discharge launder 17 of the extraction section is positioned at the first end side 18 in each extraction module 1a, 1b, 1c.

In figure 5, the arrangement comprises a plurality of extraction modules 1a, 1b, 1c arranged in parallel into a set of parallel extraction modules, where the first end side 18 of every extraction module 1a, 1b, 1c faces in a first direction, and where the second end side 19 of every extraction module 1a, 1b, 1c faces in a second direction opposite to the first direction.

In figure 5 at least one first discharge launder 16 of an extraction section 2 of an extraction module 1a, 1b in the set of parallel extraction modules is in fluid communication with a second inlet 5 of a pump 3 of another extraction module 1b, 1c of the set of parallel extraction modules.

In figure 5 at least one second inlet 5 of a pump 3 of an extraction section 2 of an extraction module 1a, 1b in the set of parallel extraction modules is in fluid communication with the second discharge launder 17 of another extraction module 1c of the set of parallel extraction modules.

In figure 5 one first inlet 4 of a pump 3 of an extraction section 2 of an extraction module 1c in the set of parallel extraction modules is in fluid communication with a first feed arrangement 33 for feeding liquid organic phase into the set of parallel extraction modules

In figure 5 one second inlet 5 of a pump 3 of an extraction section 2 of an extraction module 1b in the set of parallel extraction modules being in fluid communication with a second feed arrangement 34 for feeding liquid aqueous phase into the set of parallel extraction modules.

In figure 5 one second discharge launder 17 of an extraction module 1c in the set of parallel extraction modules is in fluid communication with a second discharge arrangement 36 for feeding extracted liquid aqueous phase from the set of parallel extraction modules.

In figure 5 one first discharge launder 16 of an extraction module 1b in the set of parallel extraction modules is in fluid communication with a first discharge arrangement 35 for feeding extracted liquid organic phase from the set of parallel extraction modules.

Figure 6 shows a part of a third embodiment of an extraction arrangement.

In figure 6, the arrangement comprising a plurality of extraction modules 1a, 1b, 1c each comprising one extraction section 2.

In figure 6 the first inlet 4 and the second inlet 5 of the pump 3 of the extraction section 2 are positioned at the first end side 18 in each extraction module 1a, 1b, 1c.

In figure 6 the first discharge launder 16 and the second discharge launder 17 of the extraction section are positioned at the second end side 19 in each extraction module 1a, 1b, 1c.

In figure 6 the arrangement comprises a plurality of extraction modules 1a, 1b, 1c arranged in parallel into a set of parallel extraction modules, where the first end side 18 of every second extraction module 1a, 1b, 1c faces in a first direction, and where the second end side 19 of every second extraction module 1a, 1b, 1c faces in a second direction opposite to the first direction.

In figure 6 at least one first discharge launder 16 of the extraction section 2 of an extraction module 1a, 1c in the set of parallel extraction modules is in fluid communication with the first inlet 4 of a pump 3 of another extraction module 1a, 1b in the set of parallel extraction modules.

In figure 6 at least one second inlet 5 of a pump 3 of the extraction section 2 of an extraction module 1a, 1c in the set of parallel extraction modules is in fluid communication with the second discharge launder 17 of another extraction module 1a, 1b in the set of parallel extraction modules.

In figure 6 one first inlet 4 of a pump 3 of the extraction section 2 of an extraction module 1c in the set of parallel extraction modules being in fluid communication with a first feed arrangement 33 for feeding liquid organic phase into the set of parallel extraction modules.

In figure 6 one second inlet 5 of a pump 3 of the extraction section 2 of an extraction module 1c in the set of parallel extraction modules being in fluid communication with a second feed arrangement 34 for feeding liquid aqueous phase into the set of parallel extraction modules.

In figure 6 one second discharge launder 17 of an extraction module 1c in the set of parallel extraction modules being in fluid communication with a second discharge arrangement 36 for feeding extracted liquid aqueous phase from the set of parallel extraction modules.

In figure 6 one second discharge launder 16 of an extraction module 1b in the set of parallel extraction modules being in fluid communication with a first discharge arrangement 35 for feeding extracted liquid organic phase from the set of parallel extraction modules.

An embodiment of the extraction arrangement comprises a plurality of extraction modules 1; 1a, 1b, 1c each comprising at least one extraction section 2; 2a, 2b, where the pump 3; 3a, 3b comprising a pump housing 27 that is made of polymer and having a substantially uniform microstructure throughout the pump housing. In this embodiment, the pump housing 27 is preferably, but not necessarily, made by rotational molding.

An embodiment of the extraction arrangement comprises a plurality of extraction modules 1; 1a, 1b, 1c each comprising at least one extraction section 2; 2a, 2b, where the mixer 7; 7a, 7b comprising a mixer housing 28 that is made of polymer and having a substantially uniform microstructure throughout the mixer housing 28. In this embodiment, the mixer housing 28 is preferably, but not necessarily, made by rotational molding.

An embodiment of the extraction arrangement comprises a plurality of extraction modules 1; 1a, 1b, 1c each comprising at least one extraction section 2; 2a, 2b, where the settler 10; 10a, 10b comprising a settler housing 29 that is made of polymer and having a substantially uniform microstructure throughout the settler housing 29. In this embodiment, the settler housing 29 is preferably, but not necessarily, made by rotational molding.

An embodiment of the extraction arrangement comprises a plurality of extraction modules 1; 1a, 1b, 1c each comprising at least one extraction section 2; 2a, 2b, where the first discharge launder 16; 16a, 16b comprising a first discharge launder housing 30 that is made of polymer and having a substantially uniform microstructure throughout the first discharge launder housing 30. In this embodiment, the first discharge launder housing 30 is preferably, but not necessarily, made by rotational molding.

An embodiment of the extraction arrangement comprises a plurality of extraction modules 1; 1a, 1b, 1c each comprising at least one extraction section 2; 2a, 2b, where the second discharge launder 17; 17a, 17b comprising a second discharge launder housing 31 that is made of polymer and having a substantially uniform microstructure throughout the second discharge launder housing 31. In this embodiment, the second discharge launder housing 31 is preferably, but not necessarily, made by rotational molding.

It is apparent to a person skilled in the art that as technology advances, the basic idea of the invention can be implemented in various ways. The invention and its embodiments are therefore not restricted to the above examples, but they may vary within the scope of the claims.

## Claims

1. An extraction arrangement for solvent extraction,
wherein the extraction arrangement comprises at least one extraction module (1; 1a, 1b, 1c), and
wherein each extraction module comprising at least one extraction section (2; 2a, 2b) each having
a pump (3; 3a, 3b) for mixing two or more mutually immiscible liquid phases together into dispersion, wherein the pump having a first inlet (4; 4a, 4b) for feeding liquid organic phase into the pump, a second inlet (5; 5a, 5b) for feeding liquid aqueous phase into the pump, and a first outlet (6; 6a, 6b) for feeding dispersion out of the pump,
a mixer (7; 7a, 7b) having a third inlet (8; 8a, 8b) in fluid communication with the first outlet of the pump for feeding dispersion into the mixer from the pump and a second outlet (9; 9a, 9b) for feeding mixed dispersion out of the mixer,
a settler (10; 10a, 10b) for separation of solution phases of mixed dispersion, wherein the settler has at a feed end (11; 11a, 11b) a fourth inlet (12; 12a, 12b) in fluid communication with the second outlet of the mixer for feeding mixed dispersion into the settler from the mixer and at a discharge end (13; 13a, 13b) a third outlet (14; 14a, 14b) and a fourth outlet (15; 15a, 15b) for discharging the separated solution phases, wherein the settler being configured to separate the solution phases of the dispersion while the mixed dispersion flows from the feed end to the discharge end, and
a first discharge launder (16; 16a, 16b) in fluid communication with the third outlet of the settler and a second discharge launder (17; 17a, 17b) in fluid communication with the fourth outlet of the settler,
**characterized,**
**by** each extraction module (1; 1a, 1b, 1c) comprising a framework structure (24) having an outer shape in the form of a cuboid,
by the pump (3; 3a, 3b), the mixer (7; 7a, 7b), the settler (10; 10a, 10b), the first discharge launder (16; 16a, 16b), and the second discharge launder (17; 17a, 17b) of said at least one extraction section (2; 2a, 2b) of each extraction module (1; 1a, 1b, 1c) are arranged fully within an inner space having the form of a cuboid, which inner space is defined by the framework structure (24),
by the pump (3; 3a, 3b), the mixer (7; 7a, 7b), the settler (10; 10a, 10b), the first discharge launder (16; 16a, 16b), and the second discharge launder (17; 17a, 17b) of said at least one extraction section (2; 2a, 2b) of the extraction module (1; 1a, 1b, 1c) being supported at the framework structure (24) of the extraction module(1; 1a, 1b, 1c),
by the pump (3; 3a, 3b) in each extraction section (2; 2a, 2b) comprising a pump housing (27),
by the mixer (7; 7a, 7b) in each extraction section (2; 2a, 2b) comprising a mixer housing (28),
by the settler (10; 10a, 10b) in each extraction section (2; 2a, 2b) comprising a settler housing (29),
by the first discharge launder (16; 16a, 16b) in each extraction section (2; 2a, 2b) comprising a first discharge launder housing (30),
by the second discharge launder (17; 17a, 17b) in each extraction section (2; 2a, 2b) comprising a second discharge launder housing (31),
by each of the pump housing (27), the mixer housing (28), the settler housing (29), the first discharge launder housing (30) and the second discharge launder housing (31) being made of polymer, and
by each of the pump housing (27), the mixer housing (28), the settler housing (29), the first discharge launder housing (30) and the second discharge launder housing (31) having a substantially uniform microstructure throughout the pump housing.

2. The extraction arrangement according to claim 1, **characterized**
**by** each extraction module (1; 1a, 1b, 1c) having the form of a cuboid having a first end side (18) and an opposite second end side (19), a bottom side (20), a top side (21), a first side (22), and a second side (23).

3. The extraction arrangement according to claim 1 or 2, **characterized**
**by** comprising a plurality of extraction modules (1; 1a, 1b, 1c) arranged in parallel into a set of parallel extraction modules.

4. The extraction arrangement according to claim 3, **characterized**
**by** at least one first discharge launder (16; 16a, 16b) of an extraction section (2; 2a, 2b) of an extraction module (1; 1a, 1b, 1c) in the set of parallel extraction modules being in fluid communication with a first inlet (4; 4a, 4b) of a pump (3; 3a, 3b) of another extraction module (1; 1a, 1b, 1c) of the set of parallel extraction modules.

5. The extraction arrangement according to claim 3 or 4, **characterized**
**by** at least one second inlet (5; 5a, 5b) of a pump (3; 3a, 3b) of an extraction section (2; 2a, 2b) of an extraction module (1; 1a, 1b, 1c) in the set of parallel extraction modules being in fluid communication with the second discharge launder (17; 17a, 17b) of another extraction module (1; 1a, 1b, 1c) of the set of parallel extraction modules.

6. The extraction arrangement according to any of the claims 3 to 5, **characterized**
**by** one first inlet (4; 4a, 4b) of a pump (3; 3a, 3b) of an extraction section (2; 2a, 2b) of an extraction module (1; 1a, 1b, 1c) in the set of parallel extraction modules being in fluid communication with a first feed arrangement (33) for feeding liquid organic phase into the set of parallel extraction modules.

7. The extraction arrangement according to any of the claims 3 to 6, **characterized**
**by** one second inlet (5; 5a, 5b) of a pump (3; 3a, 3b) of an extraction section (2; 2a, 2b) of an extraction module (1; 1a, 1b, 1c) in the set of parallel extraction modules being in fluid communication with a second feed arrangement (34) for feeding liquid aqueous phase into the set of parallel extraction modules.

8. The extraction arrangement according to any of the claims 3 to 7, **characterized**
**by** one second discharge launder (17; 17a, 17b) of an extraction module (1; 1a, 1b, 1c) in the set of parallel extraction modules being in fluid communication with a second discharge arrangement (36) for feeding extracted liquid aqueous phase from the set of parallel extraction modules.

9. The extraction arrangement according to any of the claims 3 to 8, **characterized**
**by** one first discharge launder (16; 16a, 16b) of an extraction module (1; 1a, 1b, 1c) in the set of parallel extraction modules being in fluid communication with a first discharge arrangement (35) for feeding extracted liquid organic phase from the set of parallel extraction modules.

10. The extraction arrangement according to claim 1 or 2, **characterized**
**by** comprising a plurality of extraction module (1a, 1b, 1c) each comprising a first extraction section (2a) and a second extraction section (2b),
by the first inlet (4a) and the second inlet (5a) of the pump (3a) of the first extraction section (2a) being positioned at the second end side (19) in each extraction module (1a, 1b, 1c),
by the first inlet (4b) and the second inlet (5b) of the pump (3b) of the second extraction section (2b) being positioned at the first end side (18) in each extraction module (1a, 1b, 1c),
by the first discharge launder (16a) and the second discharge launder (17a) of the first extraction section (2a) being positioned at the second end side (19) in each extraction module (1a, 1b, 1c),
by the first discharge launder (16b) and the second discharge launder (17b) of the second extraction section (2b) being positioned at the first end side (18) in each extraction module (1a, 1b, 1c), and
by the extraction modules (1a, 1b, 1c) being arranged in parallel into a set of parallel extraction modules so that the first extraction sections (2a) and the second extraction sections (2b) are arranged in alternating order in the set of parallel extraction modules.

11. The extraction arrangement according to claim 1 or 2, **characterized**
**by** comprising a plurality of extraction modules (1a, 1b, 1c) each comprising one extraction section (2),
by the first inlet (4) and the second inlet (5) of the pump (3) of the extraction section (2) being positioned at the first end side (18) in each extraction module (1a, 1b, 1c),
by the first discharge launder (16) and the second discharge launder (17) of the extraction section being positioned at the first end side (18) in each extraction module (1a, 1b, 1c), and
by the extraction modules (1a, 1b, 1c) being arranged in parallel into a set of parallel extraction modules where the first end side (18) of every extraction module (1a, 1b, 1c) faces in a first direction and where the second end side (19) of every extraction module (1a, 1b, 1c) faces in a second direction opposite to the first direction.

12. The extraction arrangement according to claim 1 or 2, **characterized**
**by** comprising a plurality of extraction modules (1a, 1b, 1c) each comprising one extraction section (2),
by the first inlet (4) and the second inlet (5) of the pump of the extraction section (2) being positioned at the first end side (18) in each extraction module (1a, 1b, 1c),
by the first discharge launder (16) and the second discharge launder (17) of the extraction section being positioned at the second end side (19) in each extraction module (1a, 1b, 1c), and
by the extraction modules (1a, 1b, 1c) being arranged in parallel into a set of parallel extraction modules where the first end side (18) of every second extraction module (1a, 1b, 1c) faces in a first direction and where the second end side (19) of every second extraction module (1a, 1b, 1c) faces in a second direction opposite to the first direction.

13. The extraction arrangement according to any of the claims 1 to 12, **characterized**
**by** the second outlet (9) of the mixer (7; 7a, 7b) being in fluid communication with the fourth inlet (12) of the settler via a second mixer (32)

14. The extraction arrangement according to any of the claims 1 to 13, **characterized by** the output of the pump (3; 3a, 3b) in each extraction section (2; 2a, 2b) being in the order of 25 to 140 m³/h, such as in the order of 25 to 75 m³/h or in the order of 80 to 140 m³/h.

## Patentansprüche

1. Extraktionsanordnung zur Lösemittelextraktion,
wobei die Extraktionsanordnung mindestens ein Extraktionsmodul (1; 1a, 1b, 1c) umfasst, und
wobei jedes Extraktionsmodul mindestens einen Extraktionsabschnitt (2; 2a, 2b) umfasst, jeweils aufweisend:
eine Pumpe (3; 3a, 3b), um zwei oder mehr miteinander unmischbare Flüssigphasen zusammen zu einer Dispersion zu mischen, wobei die Pumpe einen ersten Einlass (4; 4a, 4b) zum Einspeisen einer flüssigen organischen Phase in die Pumpe, einen zweiten Einlass (5; 5a, 5b) zum Einspeisen einer flüssigen wässrigen Phase in die Pumpe, und einen ersten Auslass (6; 6a, 6b) zum Ausspeisen einer Dispersion aus der Pumpe aufweist,
einen Mischer (7; 7a, 7b) mit einem dritten Einlass (8; 8a, 8b) in fluidischer Verbindung mit dem ersten Auslass der Pumpe zum Einspeisen einer Dispersion aus der Pumpe in den Mischer und einem zweiten Auslass (9; 9a, 9b) zum Ausspeisen einer gemischten Dispersion aus dem Mischer,
einen Absetzer (10; 10a, 10b) zum Abscheiden von Lösungsphasen einer gemischten Dispersion, wobei der Absetzer an einem Eintragsende (11; 11a, 11b) einen vierten Einlass (12; 12a, 12b) in fluidischer Verbindung mit dem zweiten Auslass des Mischers zum Einspeisen einer gemischten Dispersion aus dem Mischer in den Absetzer und an einem Austragsende (13; 13a, 13b) einen dritten Auslass (14; 14a, 14b) und einen vierten Auslass (15; 15a, 15b) zum Austragen der abgeschiedenen Lösungsphasen aufweist, wobei der Absetzer dazu eingerichtet ist, die Lösungsphasen der Dispersion abzuscheiden, während die gemischte Dispersion vom Eintragsende zum Austragsende strömt, und
eine erste Austragsrinne (16; 16a, 16b) in fluidischer Verbindung mit dem dritten Auslass des Absetzers und eine zweite Austragsrinne (17; 17a, 17b) in fluidischer Verbindung mit dem vierten Auslass des Absetzers,
**gekennzeichnet**
**dadurch, dass** jedes Extraktionsmodul (1; 1a, 1b, 1c) eine Rahmenstruktur (24) umfasst, die eine äußere Gestalt in Form eines Quaders aufweist,
dadurch, dass die Pumpe (3; 3a, 3b), der Mischer (7; 7a, 7b), der Absetzer (10; 10a, 10b), die erste Austragsrinne (16; 16a, 16b) und die zweite Austragsrinne (17; 17a, 17b) des mindestens einen Extraktionsabschnitts (2; 2a, 2b) jedes Extraktionsmoduls (1; 1a, 1b, 1c) vollständig innerhalb eines Innenraums, der die Form eines Quaders aufweist, angeordnet sind, wobei der Innenraum durch die Rahmenstruktur (24) definiert ist,
dadurch, dass die Pumpe (3; 3a, 3b), der Mischer (7; 7a, 7b), der Absetzer (10; 10a, 10b), die erste Austragsrinne (16; 16a, 16b) und die zweite Austragsrinne (17; 17a, 17b) des mindestens einen Extraktionsabschnitts (2; 2a, 2b) des Extraktionsmoduls (1; 1a, 1b, 1c) an der Rahmenstruktur (24) des Extraktionsmoduls (1; 1a, 1b, 1c) gelagert ist,
dadurch, dass die Pumpe (3; 3a, 3b) in jedem Extraktionsabschnitt (2; 2a, 2b) ein Pumpengehäuse (27) umfasst,
dadurch, dass der Mischer (7; 7a, 7b) in jedem Extraktionsabschnitt (2; 2a, 2b) ein Mischergehäuse (28) umfasst,
dadurch, dass der Absetzer (10; 10a, 10b) in jedem Extraktionsabschnitt (2; 2a, 2b) ein Absetzergehäuse (29) umfasst,
dadurch, dass die erste Austragsrinne (16; 16a, 16b) in jedem Extraktionsabschnitt (2; 2a, 2b) ein erstes Austragsrinnengehäuse (30) umfasst,
dadurch, dass die zweite Austragsrinne (17; 17a, 17b) in jedem Extraktionsabschnitt (2; 2a, 2b) ein zweites Austragsrinnengehäuse (31) umfasst,
dadurch, dass das Pumpengehäuse (27), das Mischergehäuse (28), das Absetzergehäuse (29), das erste Austragsrinnengehäuse (30) und das zweite Austragsrinnengehäuse (31) jeweils aus Polymer gefertigt sind, und
dadurch, dass das Pumpengehäuse (27), das Mischergehäuse (28), das Absetzergehäuse (29), das erste Austragsrinnengehäuse (30) und das zweite Austragsrinnengehäuse (31) über das gesamte Pumpengehäuse eine im Wesentlichen gleichförmige Mikrostruktur aufweisen.

2. Extraktionsanordnung nach Anspruch 1, **gekennzeichnet**
**dadurch, dass** jedes Extraktionsmodul (1; 1a, 1b, 1c) die Form eines Quaders aufweist, der eine erste Stirnseite (18) und eine gegenüberliegende zweite Stirnseite (19), eine Unterseite (20), eine Oberseite (21), eine erste Seite (22) und eine zweite Seite (23) aufweist.

3. Extraktionsanordnung nach Anspruch 1 oder 2, **gekennzeichnet**
**dadurch, dass** sie eine Mehrzahl von Extraktionsmodulen (1; 1a, 1b, 1c) umfasst, die parallel in einen Satz paralleler Extraktionsmodule angeordnet werden.

4. Extraktionsanordnung nach Anspruch 3, **gekennzeichnet**
**dadurch, dass** mindestens eine erste Austragsrinne (16; 16a, 16b) eines Extraktionsabschnitts (2; 2a, 2b) eines Extraktionsmoduls (1; 1a, 1b, 1c) im Satz paralleler Extraktionsmodule in fluidischer Verbindung mit einem ersten Einlass (4; 4a, 4b) einer Pumpe (3; 3a, 3b) eines anderen Extraktionsmoduls (1; 1a, 1b, 1c) des Satzes paralleler Extraktionsmodule steht.

5. Extraktionsanordnung nach Anspruch 3 oder 4, **gekennzeichnet**
**dadurch, dass** mindestens ein zweiter Einlass (5; 5a, 5b) einer Pumpe (3; 3a, 3b) eines Extraktionsabschnitts (2; 2a, 2b) eines Extraktionsmoduls (1; 1a, 1b, 1c) im Satz paralleler Extraktionsmodule in fluidischer Verbindung mit der zweiten Austragsrinne (17; 17a, 17b) eines anderen Extraktionsmoduls (1; 1a, 1b, 1c) des Satzes paralleler Extraktionsmodule steht.

6. Extraktionsanordnung nach einem der Ansprüche 3 bis 5, **gekennzeichnet**
**dadurch, dass** ein erster Einlass (4; 4a, 4b) einer Pumpe (3; 3a, 3b) eines Extraktionsabschnitts (2; 2a, 2b) eines Extraktionsmoduls (1; 1a, 1b, 1c) im Satz paralleler Extraktionsmodule in fluidischer Verbindung mit einer ersten Eintragsanordnung (33) zum Einspeisen von flüssiger organischer Phase in den Satz paralleler Extraktionsmodule steht.

7. Extraktionsanordnung nach einem der Ansprüche 3 bis 6, **gekennzeichnet**
**dadurch, dass** ein zweiter Einlass (5; 5a, 5b) einer Pumpe (3; 3a, 3b) eines Extraktionsabschnitts (2; 2a, 2b) eines Extraktionsmoduls (1; 1a, 1b, 1c) im Satz paralleler Extraktionsmodule in fluidischer Verbindung mit einer zweiten Eintragsanordnung (34) zum Einspeisen von flüssiger wässriger Phase in den Satz paralleler Extraktionsmodule steht.

8. Extraktionsanordnung nach einem der Ansprüche 3 bis 7, **gekennzeichnet**
**dadurch, dass** eine zweite Austragsrinne (17; 17a, 17b) eines Extraktionsmoduls (1; 1a, 1b, 1c) im Satz paralleler Extraktionsmodule in fluidischer Verbindung mit einer zweiten Austragsanordnung (36) zum Ausspeisen von extrahierter flüssiger wässriger Phase aus dem Satz paralleler Extraktionsmodule steht.

9. Extraktionsanordnung nach einem der Ansprüche 3 bis 8, **gekennzeichnet**
**dadurch, dass** eine erste Austragsrinne (16; 16a, 16b) eines Extraktionsmoduls (1; 1a, 1b, 1c) im Satz paralleler Extraktionsmodule in fluidischer Verbindung mit einer ersten Austragsanordnung (35) zum Ausspeisen von extrahierter flüssiger organischer Phase aus dem Satz paralleler Extraktionsmodule steht.

10. Extraktionsanordnung nach Anspruch 1 oder 2, **gekennzeichnet**
**dadurch, dass** sie eine Mehrzahl von Extraktionsmodulen (1a, 1b, 1c) umfasst, die jeweils einen ersten Extraktionsabschnitt (2a) und einen zweiten Extraktionsabschnitt (2b) umfassen,
dadurch, dass der erste Einlass (4a) und der zweite Einlass (5a) der Pumpe (3a) des ersten Extraktionsabschnitts (2a) an der zweiten Stirnseite (19) in jedem Extraktionsmodul (1a, 1b, 1c) positioniert sind,
dadurch, dass der erste Einlass (4b) und der zweite Einlass (5b) der Pumpe (3b) des zweiten Extraktionsabschnitts (2b) an der ersten Stirnseite (18) in jedem Extraktionsmodul (1a, 1b, 1c) positioniert sind,
dadurch, dass die erste Austragsrinne (16a) und die zweite Austragsrinne (17a) des ersten Extraktionsabschnitts (2a) an der zweiten Stirnseite (19) in jedem Extraktionsmodul (1a, 1b, 1c) positioniert sind,
dadurch, dass die erste Austragsrinne (16b) und die zweite Austragsrinne (17b) des zweiten Extraktionsabschnitts (2b) an der ersten Stirnseite (18) in jedem Extraktionsmodul (1a, 1b, 1c) positioniert sind,
dadurch, dass die Extraktionsmodule (1a, 1b, 1c) parallel in einen Satz paralleler Extraktionsmodule so angeordnet werden, dass die ersten Extraktionsabschnitte (2a) und die zweiten Extraktionsabschnitte (2b) in wechselnder Reihenfolge im Satz paralleler Extraktionsmodule angeordnet sind.

11. Extraktionsanordnung nach Anspruch 1 oder 2, **gekennzeichnet**
**dadurch, dass** sie eine Mehrzahl von Extraktionsmodulen (1a, 1b, 1c) umfasst, die jeweils einen Extraktionsabschnitt (2) umfassen,
dadurch, dass der erste Einlass (4) und der zweite Einlass (5) der Pumpe (3) des Extraktionsabschnitts (2) an der ersten Stirnseite (18) in jedem Extraktionsmodul (1a, 1b, 1c) positioniert sind,
dadurch, dass die erste Austragsrinne (16) und die zweite Austragsrinne (17) des Extraktionsabschnitts an der ersten Stirnseite (18) in jedem Extraktionsmodul (1a, 1b, 1c) positioniert sind, und
dadurch, dass die Extraktionsmodule (1a, 1b, 1c) parallel in einen Satz paralleler Extraktionsmodule angeordnet werden, wo die erste Stirnseite (18) jedes Extraktionsmoduls (1a, 1b, 1c) in eine erste Richtung weist und wo die zweite Stirnseite (19) jedes Extraktionsmoduls (1a, 1b, 1c) in eine der ersten Richtung entgegengesetzte zweite Richtung weist.

12. Extraktionsanordnung nach Anspruch 1 oder 2, **gekennzeichnet**
**dadurch, dass** sie eine Mehrzahl von Extraktionsmodulen (1a, 1b, 1c) umfasst, die jeweils einen Extraktionsabschnitt (2) umfassen,
dadurch, dass der erste Einlass (4) und der zweite Einlass (5) der Pumpe des Extraktionsabschnitts (2) an der ersten Stirnseite (18) in jedem Extraktionsmodul (1a, 1b, 1c) positioniert sind,
dadurch, dass die erste Austragsrinne (16) und die zweite Austragsrinne (17) des Extraktionsabschnitts an der zweiten Stirnseite (19) in jedem Extraktionsmodul (1a, 1b, 1c) positioniert sind, und
dadurch, dass die Extraktionsmodule (1a, 1b, 1c) parallel in einen Satz paralleler Extraktionsmodule angeordnet werden, wo die erste Stirnseite (18) jedes zweiten Extraktionsmoduls (1a, 1b, 1c) in eine erste Richtung weist und wo die zweite Stirnseite (19) jedes zweiten Extraktionsmoduls (1a, 1b, 1c) in eine der ersten Richtung entgegengesetzte zweite Richtung weist.

13. Extraktionsanordnung nach einem der Ansprüche 1 bis 12, **gekennzeichnet**
**dadurch, dass** der zweite Auslass (9) des Mischers (7; 7a, 7b) über einen zweiten Mischer (32) in fluidischer Verbindung mit dem vierten Einlass (12) des Absetzers steht.

14. Extraktionsanordnung nach einem der Ansprüche 1 bis 13, **gekennzeichnet**
**dadurch, dass** die Förderleistung der Pumpe (3; 3a, 3b) in jedem Extraktionsabschnitt (2; 2a, 2b) in der Größenordnung von 25 bis 140 m³/h, wie in der Größenordnung von 25 bis 75 m³/h oder in der Größenordnung von 80 bis 140 m³/h liegt.

## Revendications

1. Agencement d'extraction pour extraction par solvant,
dans lequel l'agencement d'extraction comprend au moins un module d'extraction (1 ; 1a, 1b, 1c), et
dans lequel chaque module d'extraction comprend au moins une section d'extraction (2 ; 2a, 2b) présentant chacune
une pompe (3; 3a, 3b) pour mélanger deux ou plus de deux phases liquides mutuellement immiscibles ensemble jusqu'à dispersion, ladite pompe ayant une première entrée (4 ; 4a, 4b) pour introduire une phase organique liquide dans la pompe, une deuxième entrée (5 ; 5a, 5b) pour introduire une phase aqueuse liquide dans la pompe, et une première sortie (6 ; 6a, 6b) pour faire sortir la dispersion de la pompe,
un mélangeur (7 ; 7a, 7b) ayant une troisième entrée (8 ; 8a, 8b) en communication fluidique avec la première sortie de la pompe pour introduire dans le mélangeur une dispersion venant de la pompe et une deuxième sortie (9 ; 9a, 9b) pour faire sortir du mélangeur une dispersion mélangée,
un décanteur (10; 10a, 10b) pour séparer des phases en solution de la dispersion mélangée, ledit décanteur ayant, à une extrémité d'amenée (11 ; 11a, 11b), une quatrième entrée (12 ; 12a, 12b) en communication fluidique avec la deuxième sortie du mélangeur pour introduire dans le décanteur la dispersion mélangée venant du mélangeur, et, à une extrémité d'évacuation (13 ; 13a, 13b) une troisième sortie (14 ; 14a, 14b) et une quatrième sortie (15 ; 15a, 15b) pour évacuer les phases en solution séparées, ledit décanteur étant configuré pour séparer les phases en solution de la dispersion pendant que la dispersion mélangée passe de l'extrémité d'amenée à l'extrémité d'évacuation, et
un premier conduit d'évacuation (16 ; 16a, 16b) en communication fluidique avec la troisième sortie du décanteur et un deuxième conduit d'évacuation (17 ; 17a, 17b) en communication fluidique avec la quatrième sortie du décanteur,
**caractérisé**
**en ce que** chaque module d'extraction (1 ; 1a, 1b, 1c) comprend une structure cadre (24) ayant une forme extérieure de parallélépipède rectangle,
**en ce que** la pompe (3; 3a, 3b), le mélangeur (7; 7a, 7b), le décanteur (10; 10a, 10b), le premier conduit d'évacuation (16; 16a, 16b) et le deuxième conduit d'évacuation (17; 17a, 17b) de ladite au moins une section d'extraction (2; 2a, 2b) de chaque module d'extraction (1; 1a, 1b, 1c) sont disposés entièrement dans un espace intérieur ayant la forme d'un parallélépipède rectangle, ledit espace intérieur étant défini par la structure cadre (24),
**en ce que** la pompe (3; 3a, 3b), le mélangeur (7; 7a, 7b), le décanteur (10; 10a, 10b), le premier conduit d'évacuation (16; 16a, 16b) et le deuxième conduit d'évacuation (17; 17a, 17b) de ladite au moins une section d'extraction (2; 2a, 2b) du module d'extraction (1; 1a, 1b, 1c) sont appuyés par la structure cadre (24) du module d'extraction (1; 1a, 1b, 1c),
**en ce que** la pompe (3 ; 3a, 3b) dans chaque section d'extraction (2 ; 2a, 2b) comprend un boîtier de pompe (27),
**en ce que** le mélangeur (7 ; 7a, 7b) dans chaque section d'extraction (2 ; 2a, 2b) comprend un boîtier de mélangeur (28),
**en ce que** le décanteur (10 ; 10a, 10b) dans chaque section d'extraction (2 ; 2a, 2b) comprend un boîtier de décanteur (29),
**en ce que** le premier conduit d'évacuation (16 ; 16a, 16b) dans chaque section d'extraction (2 ; 2a, 2b) comprend un premier boîtier de conduit d'évacuation (30),
**en ce que** le deuxième conduit d'évacuation (17 ; 17a, 17b) dans chaque section d'extraction (2 ; 2a, 2b) comprend un deuxième boîtier de conduit d'évacuation (31),
**en ce que** chacun des boîtier de pompe (27), boîtier de mélangeur (28), boîtier de décanteur (29), premier boîtier de conduit d'évacuation (30) et deuxième boîtier de conduit d'évacuation (31) sont faits de polymère, et
**en ce que** le boîtier de pompe (27), le boîtier de mélangeur (28), le boîtier de décanteur (29), le premier boîtier de conduit d'évacuation (30) et le deuxième boîtier de conduit d'évacuation (31) présentent une microstructure essentiellement uniforme sur l'ensemble du boîtier de pompe.

2. Agencement d'extraction selon la revendication 1, **caractérisé**
**en ce que** chaque module d'extraction (1; 1a, 1b, 1c) présente la forme d'un parallélépipède rectangle ayant une première face d'extrémité (18) et une deuxième face d'extrémité opposée (19), une face inférieure (20), une face supérieure (21), une première face latérale (22) et une deuxième face latérale (23).

3. Agencement d'extraction selon la revendication 1 ou 2, **caractérisé**
**en ce qu'**il comprend une pluralité de modules d'extraction (1 ; 1a, 1b, 1c) disposés en parallèle dans un ensemble de modules d'extraction parallèles.

4. Agencement d'extraction selon la revendication 3, **caractérisé**
**en ce qu'**au moins un premier conduit d'évacuation (16 ; 16a, 16b) d'une section d'extraction (2 ; 2a, 2b) d'un module d'extraction (1 ; 1a, 1b, 1c) dans l'ensemble de modules d'extraction parallèles est en communication fluidique avec une première entrée (4 ; 4a, 4b) d'une pompe (3 ; 3a, 3b) d'un autre module d'extraction (1 ; 1a, 1b, 1c) de l'ensemble de modules d'extraction parallèles.

5. Agencement d'extraction selon la revendication 3 ou 4, **caractérisé**
**en ce qu'**au moins une deuxième entrée (5 ; 5a, 5b) d'une pompe (3 ; 3a, 3b) d'une section d'extraction (2 ; 2a, 2b) d'un module d'extraction (1 ; 1a, 1b, 1c) dans l'ensemble de modules d'extraction parallèles est en communication fluidique avec le deuxième conduit d'évacuation (17 ; 17a, 17b) d'un autre module d'extraction (1 ; 1a, 1b, 1c) de l'ensemble de modules d'extraction parallèles.

6. Agencement d'extraction selon l'une des revendications 3 à 5, **caractérisé**
**en ce qu'**une première entrée (4 ; 4a, 4b) d'une pompe (3 ; 3a, 3b) d'une section d'extraction (2 ; 2a, 2b) d'un module d'extraction (1 ; 1a, 1b, 1c) dans l'ensemble de modules d'extraction parallèles est en communication fluidique avec un premier agencement d'amenée (33) pour introduire une phase organique liquide dans l'ensemble de modules d'extraction parallèles.

7. Agencement d'extraction selon l'une des revendications 3 à 6, **caractérisé**
**en ce qu'**une deuxième entrée (5 ; 5a, 5b) d'une pompe (3 ; 3a, 3b) d'une section d'extraction (2 ; 2a, 2b) d'un module d'extraction (1 ; 1a, 1b, 1c) dans l'ensemble de modules d'extraction parallèles est en communication fluidique avec un deuxième agencement d'amenée (34) pour introduire une phase aqueuse liquide dans l'ensemble de modules d'extraction parallèles.

8. Agencement d'extraction selon l'une des revendications 3 à 7, **caractérisé**
**en ce qu'**un deuxième conduit d'évacuation (17; 17a, 17b) d'un module d'extraction (1 ; 1a, 1b, 1c) dans l'ensemble de modules d'extraction parallèles est en communication fluidique avec un deuxième agencement d'évacuation (36) pour faire sortir de l'ensemble de modules d'extraction parallèles une phase extraite aqueuse liquide.

9. Agencement d'extraction selon l'une des revendications 3 à 8, **caractérisé en ce qu'**un premier conduit d'évacuation (16 ; 16a, 16b) d'un module d'extraction (1 ; 1a, 1b, 1c) dans l'ensemble de modules d'extraction parallèles est en communication fluidique avec un premier agencement d'évacuation (35) pour faire sortir de l'ensemble de modules d'extraction parallèles une phase extraite organique liquide.

10. Agencement d'extraction selon la revendication 1 ou 2, **caractérisé**
**en ce qu'**il comprend une pluralité de modules d'extraction (1a, 1b, 1c) comprenant chacun une première section d'extraction (2a) et une deuxième section d'extraction (2b),
**en ce que** la première entrée (4a) et la deuxième entrée (5a) de la pompe (3a) de la première section d'extraction (2a) sont positionnées du côté de la deuxième face d'extrémité (19) dans chaque module d'extraction (1a, 1b, 1c),
**en ce que** la première entrée (4b) et la deuxième entrée (5b) de la pompe (3b) de la deuxième section d'extraction (2b) sont positionnées du côté de la première face d'extrémité (18) dans chaque module d'extraction (1a, 1b, 1c),
**en ce que** le premier conduit d'évacuation (16a) et le deuxième conduit d'évacuation (17a) de la première section d'extraction (2a) sont positionnés du côté de la deuxième face d'extrémité (19) dans chaque module d'extraction (1a, 1b, 1c),
**en ce que** le premier conduit d'évacuation (16b) et le deuxième conduit d'évacuation (17b) de la deuxième section d'extraction (2b) sont positionnés du côté de la première face d'extrémité (18) dans chaque module d'extraction (1a, 1b, 1c),
**en ce que** les modules d'extraction (1a, 1b, 1c) sont disposés en parallèle dans un ensemble de modules d'extraction parallèles de manière que les premières sections d'extraction (2a) et les deuxièmes sections d'extraction (2b) soient disposées dans un ordre alternant dans l'ensemble de modules d'extraction parallèles.

11. Agencement d'extraction selon la revendication 1 ou 2, **caractérisé**
**en ce qu'**il comprend une pluralité de modules d'extraction (1a, 1b, 1c) comprenant chacun une section d'extraction (2),
**en ce que** la première entrée (4) et la deuxième entrée (5) de la pompe (3) de la section d'extraction (2) sont positionnées du côté de la première face d'extrémité (18) dans chaque module d'extraction (1a, 1b, 1c),
**en ce que** le premier conduit d'évacuation (16) et le deuxième conduit d'évacuation (17) de la section d'extraction sont positionnés du côté de la première face d'extrémité (18) dans chaque module d'extraction (1a, 1b, 1c), et
**en ce que** les modules d'extraction (1a, 1b, 1c) sont disposés en parallèle dans un ensemble de modules d'extraction parallèles où la première face d'extrémité (18) de chaque module d'extraction (1a, 1b, 1c) est tournée vers une première direction et où la deuxième face d'extrémité (19) de chaque module d'extraction (1a, 1b, 1c) est tournée vers une deuxième direction opposée à la première direction.

12. Agencement d'extraction selon la revendication 1 ou 2, **caractérisé**
**en ce qu'**il comprend une pluralité de modules d'extraction (1a, 1b, 1c) comprenant chacun une section d'extraction (2),
**en ce que** la première entrée (4) et la deuxième entrée (5) de la pompe de la section d'extraction (2) sont positionnées du côté de la première face d'extrémité (18) dans chaque module d'extraction (1a, 1b, 1c),
**en ce que** le premier conduit d'évacuation (16) et le deuxième conduit d'évacuation (17) de la section d'extraction sont positionnés du côté de la deuxième face d'extrémité (19) dans chaque module d'extraction (1a, 1b, 1c), et
**en ce que** les modules d'extraction (1a, 1b, 1c) sont disposés en parallèle dans un ensemble de modules d'extraction parallèles où la première face d'extrémité (18) de chaque deuxième module d'extraction (1a, 1b, 1c) est tournée vers une première direction et où la deuxième face d'extrémité (19) de chaque deuxième module d'extraction (1a, 1b, 1c) est tournée vers une deuxième direction opposée à la première direction.

13. Agencement d'extraction selon l'une des revendications 1 à 12, **caractérisé**
**en ce que** la deuxième sortie (9) du mélangeur (7 ; 7a, 7b) est en communication fluidique avec la quatrième sortie (12) du décanteur via un deuxième mélangeur (32).

14. Agencement d'extraction selon l'une des revendications 1 à 13, **caractérisé**
**en ce que** le débit de la pompe (3 ; 3a, 3b) dans chaque section d'extraction (2 ; 2a, 2b) est de l'ordre de 25 à 140 m³/h, tel que de l'ordre de 25 à 75 m³/h ou de l'ordre de 80 à 140 m³/h.
